# EUROPEAN PATENT APPLICATION

(11) **EP 1 406 417 A1**
(43) Date of publication of application: **07.04.2004**
(21) Application number: 03022513.0
(22) Date of filing: 02.10.2003
(51) Int. Cl.: H04L 12/56

(54) **Routing control device and method of generating routing control information**

(30) Priority: 04.10.2002 JP 2002292504
(71) Applicant: NTT DoCoMo, Inc., Tokyo 100-6150 (JP)
(72) Inventor: Jo, Manhee, NTT DoCoMo, Inc.,, Chiyoda-ku Tokyo 100-6150 (JP); Nishida, Katsutoshi, NTT DoCoMo, Inc.,, Chiyoda-ku Tokyo 100-6150 (JP); Okagawa, Takatoshi, NTT DoCoMo, Inc.,, Chiyoda-ku Tokyo 100-6150 (JP); Shinagawa, Noriteru, NTT DoCoMo, Inc.,, Chiyoda-ku Tokyo 100-6150 (JP)
(74) Representative: GROSSE BOCKHORNI SCHUMACHER

(57) **Abstract**

An object of the present invention is to provide a routing control device and method of generating routing control information whereby the function of connected transfer devices can be more simplified and more efficient, and routing information can be grasped appropriately. A communication system includes a plurality of transfer devices R1-R6 and a routing control device. Each of the transfer devices R1-R6 is physically connected with the routing control device and transmits the topology information (link information and metric information) possessed individually to the routing control device. The routing control device has a routing control information generating unit that generates routing control information collectively based on routing information such as the topology information transmitted from the transfer devices R1-R6. The routing control information generating unit generates a routing control table for all of the transfer devices that transmitted routing information thereto. The routing control device transmits information contained in the routing control table to the transfer devices R1-R6 and the transfer devices R1-R6 control sending and receiving of packets in accordance with the information transmitted thereto.

## Description

### BACKGROUND OF THE INVENTION

### Field of the Invention

The present invention relates to a routing control device and method of generating routing control information.

### Related Background Art

In a conventional internet, routing control functions and transfer control functions are possessed by each transfer device in the network and the transfer devices perform packet transfer in accordance with the individual routing control information. The routing control information possessed by a transfer device which decides whether transfer devices exchange packets or not, can also be determined by negotiation among the network managers. However, since the decision by each transfer device is based on route calculations performed by each transfer device, only the transfer device can grasp the routing information. Furthermore, among the transfer devices, only the transfer devices that understand the same protocol can construct routing control information using the same mechanism. Routing information exchanged by transfer devices having different protocols cannot be used, so that there is no compatibility. As related technical references, there may be mentioned for example Japanese Patent Application Laid-open No. 2000-209264, the reference "Mark Miller, Implementing IPv6 second edition, 2000 pp. 193-220" and reference "C Hedrick, Routing Information Protocol (RFC 1058), June 1988".

However, since each transfer device in the network has routing control functions and transfer control functions, it is difficult to expand or delete routing control functions. In addition, the mixture of different routing control functions present in the network makes the control of the network complicated. In particular, regarding routing control, since the method of collection or calculation of routing information by the transfer device is different from protocol to protocol, transfer devices that do not have the same protocol cannot exchange information appropriately. A further problem is that, when routing information is generated, for some protocols, the method of calculation is very complex, so the function of the transfer device tends to be more complex.

In view of the foregoing, an object of the present invention is provision of a routing control device and method of generating routing control information whereby the function of connected transfer devices can be more simplified and more efficient, and routing information can be grasped appropriately.

### SUMMARY OF THE INVENTION

A routing control device according to the present invention is a routing control device to which transfer devices for performing transfer control processing are connected, the routing control device comprising routing control information generating means that generates routing control information collectively based on the routing information transmitted from the transfer devices.

A routing control device according to the present invention uses the routing control information generating means to generate routing control information collectively based on the routing information transmitted thereto from the transfer devices. In this way, since the routing control device is provided with the routing control information generating means that generates routing control information collectively in accordance with a certain method, the transfer devices do not need to have complicated calculation capabilities for generating routing control information, so the function of the transfer devices connected to this routing control device can be more simplified and more efficient. In addition, for the transfer devices, comprehensive and consistent routing control information is generated, so the route whereby the packets are passed can easily be grasped.

Preferably, the routing control information generating means generates a routing control table for the routing control information.

Preferably, the routing control information generating means generates routing control information for all of the transfer devices that are physically connected thereto and that have transmitted routing information thereto. If such an arrangement is adopted, the routing control device can easily generate routing control information reflecting the condition after grasping the condition of the entire network.

Preferably, the routing information includes at least adjacency information between transfer devices and metric information of the links which connect the transfer devices, and at least when the topology information in the network is changed, the routing control information generating means generates new routing control information based on the changed information. If such an arrangement is adopted, suitable routing control information can be generated in accordance with the network condition.

Preferably, in cases where a plurality of transfer routes exist whose metric is the minimum value between the transfer devices, the routing control information generating means grasps the routing information of all the plurality of transfer routes. If such an arrangement is adopted, the routing control device can generate appropriate routing control information reflecting the condition after grasping the condition of all of the routes whose metric is the minimum value.

According to the present invention, a method of routing control information generation in a routing control device to which transfer devices for performing routing control processing are connected, is provided. There, routing control information generating means recognizes the number of these transfer devices based on routing information transmitted from the transfer devices and generates an initial routing control table for the transfer devices whose number has thus been recognized and then, for each transfer device, calculates metrics to all the other transfer devices and generates a routing control table using the minimum value and the identifiers of adjacent transfer devices on all the routes whose metric is the minimum value.

In the method of generating routing control information according to the present invention, the routing control information generating means recognizes the number of the transfer devices using the routing information transmitted thereto from the transfer devices and generates an initial routing control table for the transfer devices whose number has thus been recognized. After this, for each of the transfer devices, the metric to all of the other transfer devices is calculated and a routing control table is generated using the minimum value and the identifiers of adjacent transfer devices on all the routes whose metric is the minimum value. In this way, routing control table can be calculated appropriately.

### BRIEF DESCRIPTION OF THE DRAWINGS

Figure 1 is a diagram showing the configuration of a communication system according to the present embodiment;

Figure 2 is a view given in explanation of the exchange of adjacency information performed between transfer devices;

Figure 3A is a view showing topology information generated by a transfer device R1;

Figure 3B is a view showing topology information generated by a transfer device R2;

Figure 3C is a view showing topology information generated by a transfer device R3;

Figure 3D is a view showing topology information generated by a transfer device R4;

Figure 3E is a view showing topology information generated by a transfer device R5;

Figure 3F is a view showing topology information generated by a transfer device R6;

Figure 4 is a view given in explanation of transmission of routing information from a transfer device to a routing control device;

Figure 5 is a flow chart given in explanation of processing for generating a routing control table by a routing control information generating unit of the routing control device;

Figure 6 is a view given in explanation of the configuration of an initial routing table;

Figure 7 is a view given in explanation of the data structure used when calculating the routing control table;

Figure 8 is a view given in explanation of the configuration of the generated routing control table;

Figure 9 is a view given in explanation of transmission of routing information from the routing control device to the transfer devices; and

Figure 10 is a view given in explanation of an example of modification of the data structure used when calculating the routing control table.

### DESCRIPTION OF THE PREFERRED EMBODIMENTS

A routing control device and method of generating routing control information according to an embodiment of the present invention will be described with reference to the drawings. In the description, the same reference symbols are employed for identical elements or elements having the same function to avoid duplication of description.

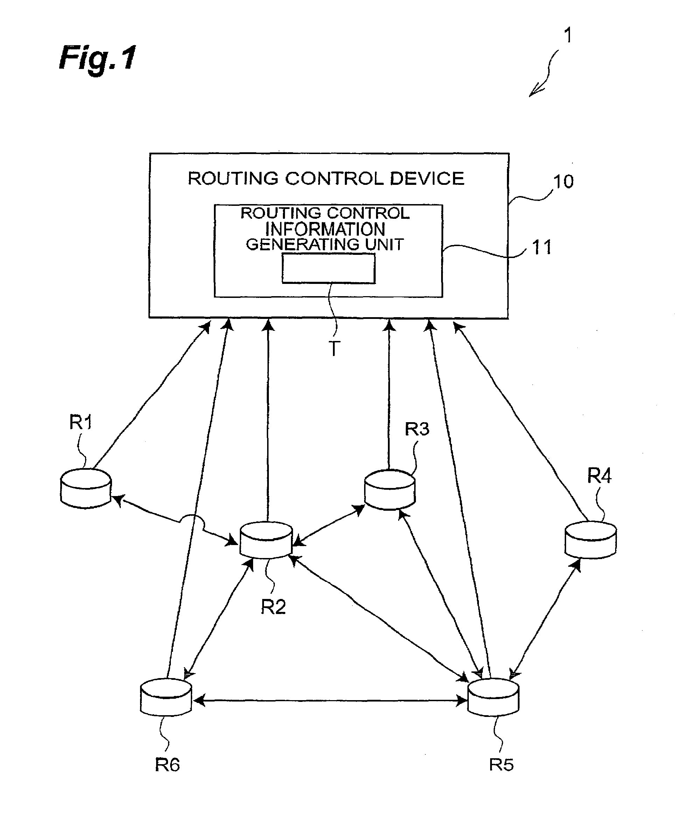

Figure 1 is a diagram showing the configuration of a communication system according to the present embodiment. As shown in Figure 1, the communications system 1 includes a plurality of transfer devices R1-R6 and a routing control device 10.

Each of the transfer devices R1-R6 transfers packets by performing transfer control processing and exchanges adjacency information between adjacent transfer devices. Each of the transfer devices R1-R6 can be physically constituted by routers or the like. In this embodiment, for example the transfer device R1 exchanges adjacency information with the transfer device R2 and the transfer device R2 further exchanges adjacency information with the transfer devices R3, R5 and R6. Also, the transfer device R3 exchanges adjacency information with the transfer devices R2 and R5 and the transfer device R4 exchanges adjacency information with the transfer device R5. Also, the transfer device R5 exchanges adjacency information with the transfer devices R2, R3 and R4 and the transfer of device R6 exchanges adjacency information with the transfer device R2.

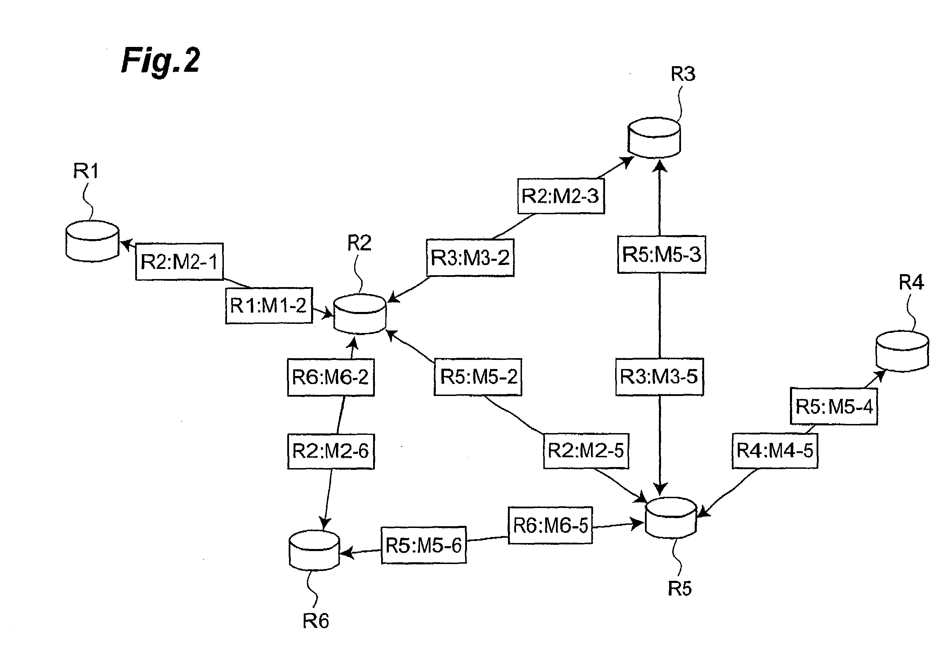

Specifically, as shown in Figure 2, each of the transfer devices R1-R6 transmits adjacency information constituted by for example its own identifier information, subnet information and metric information to the surrounding transfer devices that are physically connected therewith. Each of the transfer device R1-R6 also recognizes the connection information and the congestion information of the network by receiving the adjacency information (for example identifier information, subnet information and metric information) that is transmitted thereto from the surrounding transfer devices. In Figure 2, for example, "R1: M1-2" is the adjacency information transmitted from the transfer device R1 to the transfer device R2, "R1" being the identifier information of the transfer device R1 and "M1-2" being the metric information from the transfer device R1 to the transfer device R2. Also "R2: M2-1" is the adjacency information transmitted from the transfer device R2 to the transfer device R1, "R2" being the identifier information of the transfer device R2 and "M2-1" being the metric information from the transfer device R2 to the transfer device R1. Likewise, "R2: M2-3" is the adjacency information transmitted from the transfer device R2 to the transfer device R3, "R2" being the identifier information of the transfer device R2 and "M2-3" being the metric information from the transfer device R2 to the transfer device R3. Also, "R3: M3-2" is the adjacency information transmitted from the transfer device R3 to the transfer device R2, "R3" being the identifier information of the transfer device R3 and "M3-2" being the metric information from the transfer device R3 to the transfer device R2.

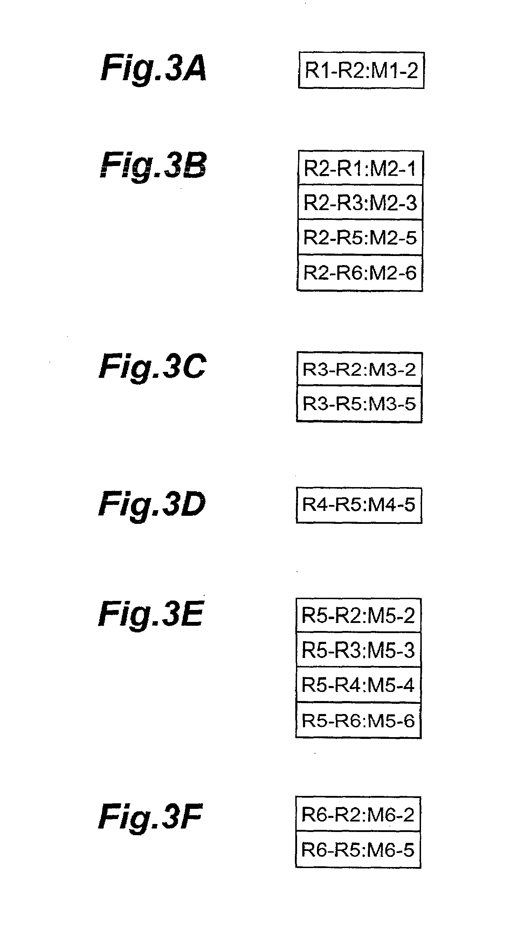

The exchange of adjacency information described above is performed periodically and each of the transfer devices R1-R6 can thereby sense changes of the topology. Each of the transfer devices can also sense congestion by for example inspecting the state of use of their own buffers. Based on the above, each of the transfer devices R1-R6 generates topology information as shown in Figure 3A to Figure 3F. Figure 3A shows the topology information generated by the transfer device R1, Figure 3B shows the topology information generated by the transfer device R2, Figure 3C shows the topology information generated by the transfer device R3, Figure 3D shows the topology information generated by the transfer device R4, Figure 3E shows the topology information generated by the transfer device R5 and Figure 3F shows the topology information generated by the transfer device R6. For example, the topology information "R1-R2: M1-2" shown in Figure 3A is generated by the transfer device R1. It is generated by information exchange with the transfer device R2 that is physically connected with the transfer device R1. "R1-R2" is the link information (adjacency information) from the transfer device R1 to the transfer device R2 and "Ml-2" is the metric information on the link from the transfer device R1 to the transfer device R2.

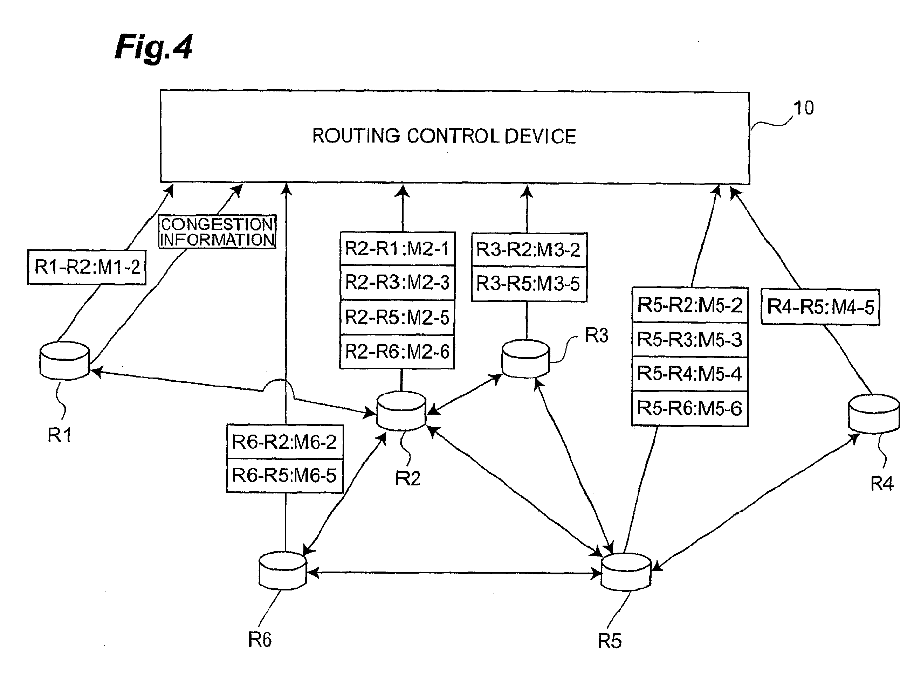

Also, each of the transfer devices R1-R6 is physically connected with the routing control device 10, and, as shown in Figure 4, sends the topology information (link information and metric information) individually possessed to the routing control device 10. Also, each of the transfer devices R1-R6 sends dynamic information i.e. congestion information to the routing control device 10. Transmission of information from each of the transfer devices R1-R6 to the routing control device 10 is performed only on initialization and changes of network.

The routing control device 10 is physically connected with each of the transfer devices R1-R6 as described above and is provided with routing control information generating means constituted by a routing control information generating unit 11. This routing control information generating unit 11 collectively generates, routing control information based on the routing information such as the topology information transmitted thereto from each of the transfer devices R1-R6. The routing control information generating unit 11 generates routing control information in the form of a routing control table T for all of the transfer devices to which it is connected and that transmit routing information thereto.

Also, the routing control device 10 sends the routing control information contained in the routing control table T generated by the routing control information generating unit 11, to each of the transfer devices R1-R6. The routing control information that is sent to each of the transfer devices R1-R6 is the portion thereof relating to sending and receiving of packets among the transfer devices R1-R6. Each of the transfer devices R1-R6 to which the information has been sent stores the routing control information in storage means such as a cache individually possessed and controls sending and receiving of packets in accordance with the routing control information.

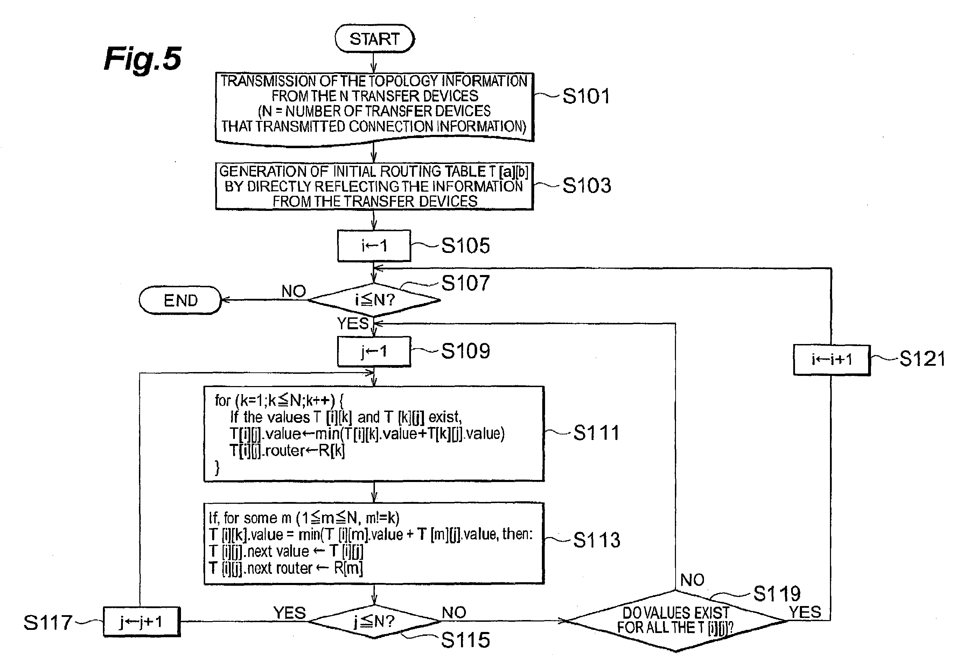

Next, the processing for generation of the routing control table T in the routing control information generating unit 11 will be described with reference to Figure 5.

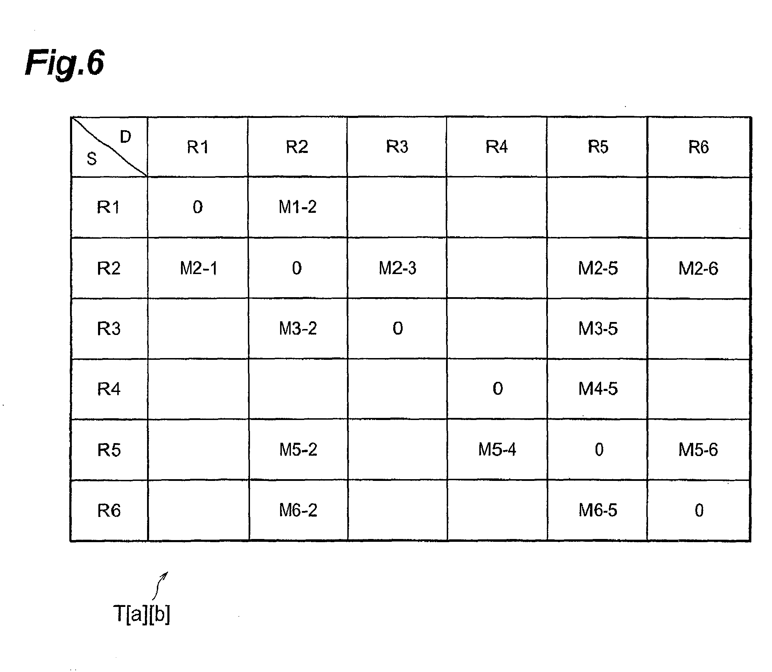

First of all, when topology information is transmitted thereto (S101) from the N (six in the case of this embodiment) transfer devices R1-R6 to which routing information was transmitted, the routing control information generating unit 11 uses this topology information transmitted from each of the transfer devices R1-R6 after initialization, to generate (S103) a routing control table T [a] [b] as shown in Figure 6. The routing control table T [a] [b] shown in Figure 6 is an initial routing table recording metric information between the transfer devices on the sending side ("S" in Figure 6) and the transfer devices on the receiving side ("D" in Figure 6). For example, as the metric information between the transfer device R1 on the sending side (S) and the transfer device R2 on the receiving side (D), "M1-2" is recorded in the entry specified by the sending transfer device R1 and receiving transfer device R2. In the current condition, no physical connection is established between the transfer device R1 and each of the transfer devices R3-R6, so no information is recorded in the entries designated for the transfer devices R3-R6 on the receiving side (D).

Next, "i" is set to "1" (S105) and a decision is made as to whether "i" is no more than "N" or not (S107). If "i" is more than "N", processing is terminated. Symbol "i" is a symbol used to specify a transfer device on the sending side. On the other hand, if "i" is "N" or less, "j" is set to "1" (S109). Symbol "j" is a symbol for used to specify a transfer device on the receiving side.

Next, the metric of the route from the sending transfer device "i" to the receiving transfer device "j" through the transfer device "k" to which the packet is first sent, is calculated, and a routing control table is generated (S111) on the route having the minimum value, using this initial value and the identifiers of the adjacent transfer devices whereby a packet was first transmitted. Also, since it is possible that there is a plurality of routes having the minimum value, the metrics of routes to the receiving transfer device "j" through transfer devices "m" different from the aforementioned "k" are calculated and a routing control table is generated (S113) using this minimum value and the identifiers of the adjacent transfer devices through which a packet may be first transferred, on routes having the minimum value.

Next, a determination is made as to whether "j" is "N" or less (S115), or not, and if "j" is "N" or less, "j" is set to "j+1" (S117) and processing returns to the aforementioned S111. On the other hand, if "j" is greater than "N", a determination is made (S119) as to whether values exist for all of the T [i] [j] or not, i.e. as to whether the minimum value of the metrics between the N transfer devices R1-R6 that have transmitted routing information and the identifiers of the adjacent transfer devices that first transmitted packets is determined or not (S119). If values do not exist for all of the T [i] [j], processing returns to the aforesaid S109. On the other hand, if values do exist for all of the T [i] [j], "i" is set to "i+1" (S121) and processing returns to the aforementioned S107.

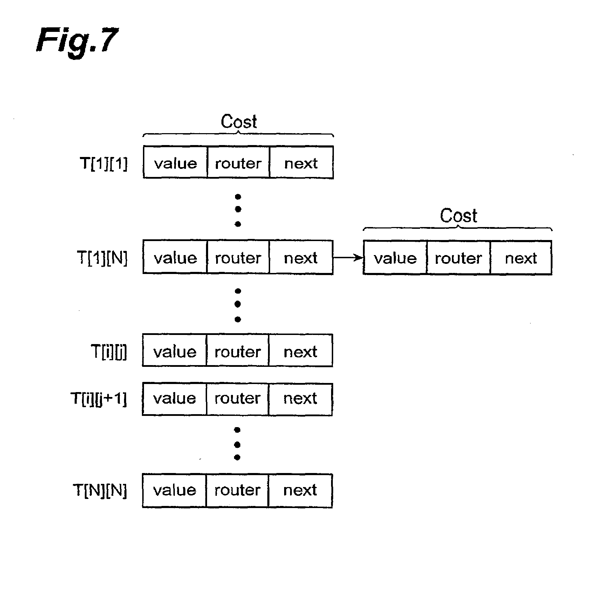

It should be noted that the data structure employed when calculating the routing control tables is expressed by:
Typedef struct cost[int value; int router ; cost* next;]
Cost;
Cost T[i][j];
the entries being defined as an array, in which each entry comprises a metric value, identifiers of the adjacent routers and a pointer to the next entry. The array of entries constitutes a table; the structure of this table is shown in Figure 7.

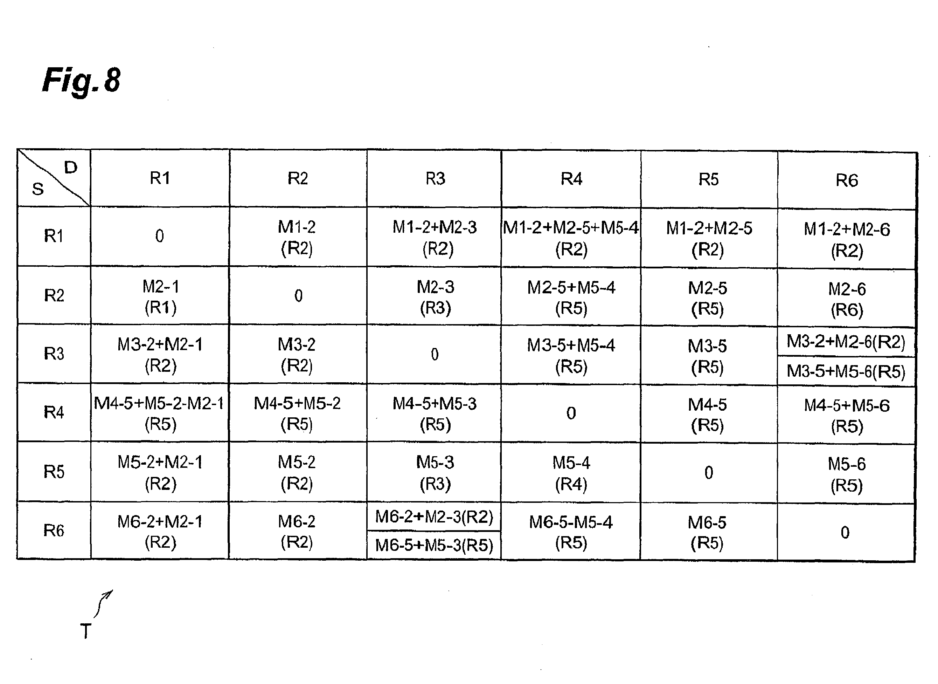

The routing control table T shown in Figure 8 is generated by the above-mentioned generating processing. For example, although the sending transfer device R1 and the receiving transfer device R3 are not physically directly connected, the sending transfer device R1 and the receiving transfer device R3 can be connected through transfer device R2. Therefore the transfer device that first sends the packet is "R2 (k=2)", and the metric between the sending transfer device R1 and the receiving transfer device R3 is the sum of the metric "M1-2" between the transfer device R1 and the transfer device R2 and the metric "M2-3" between the transfer device R2 and the transfer device R3. As shown in Figure 8, in the entry specified by the sending transfer device R1 and receiving transfer device R3, the total metric "M1-2 + M2-3" from the transfer device R1 to the transfer device R3 is recorded and "R2" is recorded as the initial transfer device.

Also, between the sending transfer device R3 and receiving transfer device R6, as the transfer device to which the packet is first sent, there exist two transfer devices, namely, transfer device R2 and transfer device R5. Consequently, as shown in Figure 8, in the entry specified by the sending transfer device R3 and receiving transfer device R6, two items of information are recorded, namely, for the case where transmission occurs through transfer device R2 and for the case where transmission occurs through the transfer device R5.

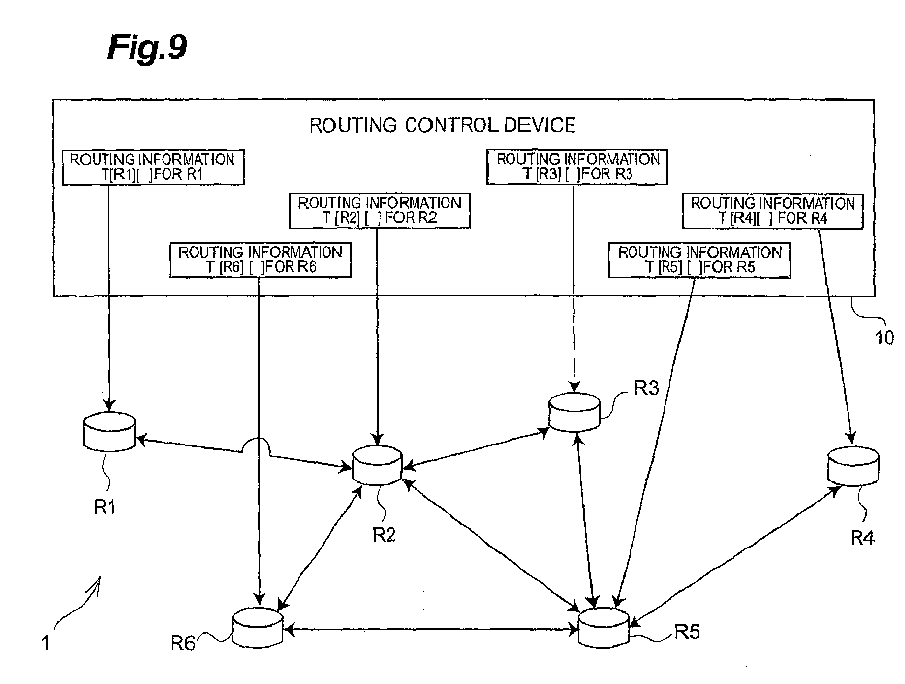

The routing control device 10 then sends the information recorded in the routing control table T to each of the transfer devices R1-R6, as shown in Figure 9. For example, the information T [R1] [] of the row of the sending-side "R1" in Figure 8 of the routing control table T is transmitted as routing control information to the transfer device R1. Likewise, the information T [R2] [] of the row of the sending-side "R2" in Figure 8 of the routing control table T is transmitted as routing control information to the transfer device R2. Also, the information T [R3] [] of the row of the sending-side "R3" in Figure 8 of the routing control table T is transmitted as routing control information to the transfer device R3, and the information T [R4] [] of the row of the sending-side "R4" in Figure 8 of the routing control table T is transmitted as routing control information to the transfer device R4. Also, the information T [R5] [] of the row of the sending-side "R5" in Figure 8 of the routing control table T is transmitted as routing control information to the transfer device R5, and the information T [R6] [] of the row of the sending-side "R6" in Figure 8 of the routing control table T is transmitted as routing control information to the transfer device R6.

As described above, with a routing control device 10 according to this embodiment, routing control processing and transfer control processing are separated, routing control processing being performed by the routing control device 10 and transfer control processing being performed by the transfer devices R1-R6. Also, the routing control information generating unit 11 collectively generates a routing control table T constituting routing control information, by using the routing information transmitted thereto from the transfer devices R1-R6. Thus the routing control device 10 is provided with the aforementioned routing control information generating unit 11 which generates routing control information collectively in accordance with a certain method. In this way, the need for each of the transfer devices R1-R6 to have capabilities of complicated calculation for generating routing control information is eliminated, making it possible for routing control device 10 to simplify and improve efficiency for the function of the transfer devices R1-R6 that are connected with the routing control device 10. Also, comprehensive and consistent routing control information relating to each of the transfer devices R1-R6 is generated, making it possible for routing control device 10 to easily grasp the routes by which the packets pass.

Also, the routing control information generating unit 11 in the routing control device 10 of this embodiment generates routing control information (routing control table T) for all of the transfer devices R1-R6 that are physically connected therewith and that have transmitted routing information thereto. In this way, the routing control device 10 can easily grasp the condition of the entire network and generate routing control information reflecting this condition.

Also, in the routing control device 10 of this embodiment, the routing information includes at least adjacency information between the transfer devices (link information) and metric information of the links connecting the transfer devices. In addition, at least when the topology information in the network is changed, the routing control information generating unit 11 generates new routing control information based on the changed information. In this way, the routing control device 10 can generate routing control information in accordance with the network condition appropriately.

Also, in the routing control device 10 of this embodiment, in cases where there are a plurality of transfer routes between the transfer devices R1-R6 whose metric is the minimum value, the routing control information generating unit 11 grasps the routing information of all of the plurality of transfer routes in question. In this way, the routing control device 10 can generate routing control information reflecting this condition appropriately, after grasping the condition of all of the transfer routes whose metric is the minimum value.

Also, in the routing control device 10 of this embodiment, the routing control information generating unit 11 recognizes the number of transfer devices R1-R6 by using the routing information transmitted from the transfer devices R1-R6 and generates an initial routing control table (routing control table T [a] [b]) for the transfer devices R1-R6 whose number has been recognized. After this, the metrics for each of the transfer devices R1-R6 to all of the other transfer devices are calculated and a routing control table T is generated using this minimum value and the identifiers of adjacent transfer devices on all the routes whose metric is the minimum value. In this way, a routing control table T can be generated appropriately at the routing control device 10.

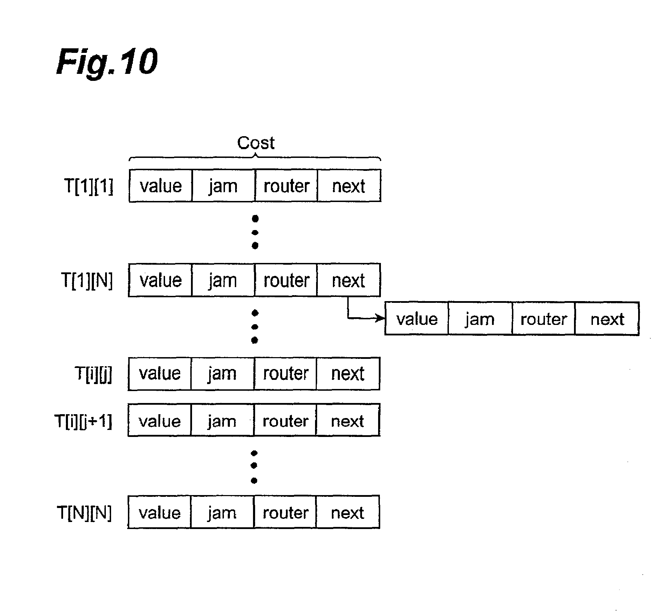

The present invention is not restricted to the embodiment described above. For example, the table structure employed may be a table structure as shown in Figure 10 having a data structure for reflecting network congestion information such as:
Typedef struct cost[int value; int jam; int router ; cost* next;] Cost;
Cost T[i][j];
as the data structure employed to calculate the routing control table. The term "jam" indicates congestion information and can be employed as a parameter for cost calculation (calculation of the minimum value of the metric).

As described in detail above, according to the present invention, a routing control device and method of generating routing control information can be provided whereby it becomes possible to simplify and improve efficiency for the function of the connected transfer devices and to grasp the routing information appropriately.

## Claims

1. A routing control device to which transfer devices for performing transfer control processing are connected, comprising:
routing control information generating means that generates routing control information collectively based on the routing information transmitted from said transfer devices.

2. The routing control device according to claim 1 wherein said routing control information generating means generates a routing control table as said routing control information.

3. The routing control device according to claim 1 wherein said routing control information generating means generates routing control information for all of the transfer devices that are physically connected therewith and that have transmitted said routing information thereto.

4. The routing control device according to claim 1 wherein said routing information includes at least adjacency information between transfer devices and metric information of the links which connect the transfer devices,
and at least when the topology information in the network is changed, the routing control information generating means generates new routing control information based on the changed information.

5. The routing control device according to claim 1, in cases where a plurality of transfer routes exist whose metric is the minimum value between said transfer devices, said routing control information generating means grasps the routing information of all the plurality of transfer routes.

6. A method of generating routing control information in a routing control device to which transfer devices for performing routing control processing are connected,
wherein routing control information generating means recognizes the number of these transfer devices based on routing information transmitted from said transfer devices, generates an initial routing control table for the transfer devices whose number has thus been recognized, then, for each said transfer device, calculates metrics to all the other transfer devices, and generates a routing control table using the minimum value and the identifiers of adjacent transfer devices on all the routes whose said metric is the minimum value.
